# EUROPEAN PATENT SPECIFICATION

(11) **EP 2 677 576 B1**
(45) Date of publication and mention of the grant of the patent: **10.02.2016**
(21) Application number: 12747513.5
(22) Date of filing: 10.02.2012
(51) Int. Cl.: H01M 4/485, C01G 23/00, C01G 49/00, H01M 4/131, H01M 4/02

(54) **NEGATIVE ELECTRODE ACTIVE MATERIAL FOR LITHIUM ION SECONDARY BATTERY, AND MANUFACTURING METHOD FOR SAME**
NEGATIV AKTIVES ELEKTRODENMATERIAL FÜR EINE LITHIUMIONENSEKUNDÄRBATTERIE SOWIE HERSTELLUNGSVERFAHREN DAFÜR
MATIÈRE ACTIVE D'ÉLECTRODE NÉGATIVE POUR BATTERIE SECONDAIRE AU LITHIUM-ION ET PROCÉDÉ DE FABRICATION ASSOCIÉ

(30) Priority: 15.02.2011 US 201161442958 P
(43) Date of publication of application: 25.12.2013
(73) Proprietor: Panasonic Intellectual Property Management Co., Ltd., Osaka 540-6207 (JP)
(72) Inventor: GOTO, Natsumi, Osaka 540-6207 (JP); TAKEUCHI, Takashi, Osaka 540-6207 (JP); HASEGAWA, Masaki, Osaka 540-6207 (JP)
(74) Representative: TBK
(86) International application number: PCT/JP2012/000908
(87) International publication number: WO 2012/111294

(56) References cited:
- JP-A- 2001 126 728
- JP-A- 2001 185 141
- JP-A- 2001 185 141
- JP-A- 2002 184 400
- JP-A- 2003 217 583
- JP-A- 2009 190 954
- JP-A- 2009 190 954
- JP-A- 2010 097 845
- KUBIAK P ET AL: "Phase transition in the spinel Li4Ti5O12 induced by lithium insertion - Influence of the substitutions Ti/V, Ti/Mn, Ti/Fe", JOURNAL OF POWER SOURCES, ELSEVIER SA, CH, vol. 119-121, 1 June 2003 (2003-06-01), pages 626-630, XP004430243, ISSN: 0378-7753, DOI: 10.1016/S0378-7753(03)00186-1
- ROBERTSON A D ET AL: "Li(1+x)Fe(1-3x)Ti(1+2x)O(4) Based Spinels: Possible Negative Electrode Materials for Future Li-Ion Batteries", JOURNAL OF THE ELECTROCHEMICAL SOCIETY, ELECTROCHEMICAL SOCIETY, MANCHESTER, NEW HAMPSHIRE; US, vol. 146, no. 11, 1 November 1999 (1999-11-01), pages 3958-3962, XP002270610, ISSN: 0013-4651, DOI: 10.1149/1.1392576
- PIERRE KUBIAK ET AL.: 'Phase transition in the spinel Li4Tis012 induced by lithium insertion Influence of the substitutions Ti/V, Ti/Mn, Ti/Fe' JOURNAL OF POWER SOURCES vol. 119-121, 2003, pages 626 - 630, XP004430243
- A. D. ROBERTSON ET AL.: 'Li1+xFe1-3xTi1+2xO4(0.0?x? 0.33) Based Spinels:Possible Negative Electrode Materials for Future Li-Ion Batteries' JOURNAL OF THE ELECTROCHEMICAL SOCIETY vol. 146, no. 11, 1999, pages 3958 - 3962, XP002270610
- Zhao H Ai-Lei ET AL: "Effect of vanadium doping on the performance of Li4Ti5O12", Battery Bimonthly, Vol. 36, No. 2, 1 April 2006 (2006-04-01), pages 124-126, XP055188485, Retrieved from the Internet: URL:http://en.cnki.com.cn/Article_en/CJFDT OTAL-DYJS201103031.htm [retrieved on 2015-05-11]

## Description

### TECHNICAL FIELD

The present invention relates to a negative electrode for a lithium ion secondary battery, and a method for producing the active material for the negative electrode.

### BACKGROUND ART

In recent years, different types of lithium ion secondary batteries have been developed. Carbon materials have been conventionally used as a negative electrode active material for a lithium ion secondary battery. However, lithium titanium complex oxide materials have recently been developed and attracting public attention. For example, a lithium ion secondary battery using LiCoO₂ as the positive electrode active material and Li₄Ti₅O₁₂ as the negative electrode active material has already been put to practical use.

Li₄Ti₅O₁₂ is a material having a spinel crystalline structure and is capable of repeatedly occlude and release Li, and therefore Li₄Ti₅O₁₂ can be used as an active material for a lithium ion secondary battery. Li₄Ti₅O₁₂ occludes and releases Li at a potential of about 1.5 V with respect to the standard oxidation-reduction potential of lithium (Li/Li⁺). Therefore, it is believed that where Li₄Ti₅O₁₂ is used as a negative electrode active material in a lithium ion secondary battery, lithium metal is unlikely to deposit on the negative electrode even if there occurs a reaction overvoltage resulting from rapid charging, or the like, thus realizing a lithium ion secondary battery with a high degree of safety. It also offers desirable cycle characteristics because there is little lattice dilation from charging/discharging.

Materials have been developed, various properties of which are improved by adding an additive element to Li₄Ti₅O₁₂. For example, Patent Document 1 discloses a material in which a portion of Ti element of Li₄Ti₅O₁₂ is substituted with a different element selected from V element, Nb element, Mo element and P element for the purpose of improving the output characteristics by increasing the electronic conductivity. However, the discharge capacity at high loads is 83% or less that at low loads, and it cannot be said that the discharge capacity is sufficient.

Patent Document 2 discloses a material in which a portion of Ti element of Li₄Ti₅O₁₂ is substituted with a transition metal element other than Ti element. Patent Document 2 reports that the storage stability improves by substituting a portion of Ti element with various transition metal elements. However, the actual syntheses, the resulting production of intended lithium titanium complex oxides, and the property of the produced materials are only reported for cases in which the substituting element is B element, Co element or Zn element. Also, it provides no specific reference to the output characteristics or the electrode capacity density.

Patent Document 3 discloses that Li_{4/3}Ti_{5/3-x}FeₓO₄ (0<x≤0.2) obtained by substituting a portion of Ti element of Li₄Ti₅O₁₂ with Fe has an improved electronic conductivity as compared with Li₄Ti₅O₁₂. With Li₄Ti₅O₁₂ and Li_{4/3}Ti_{5/3-x}FeₓO₄, however, the particle size of primary particle is small, and therefore the packing density in the electrode is low, resulting in a problem that the energy density as an electrode is small.

### CITATION LIST

### PATENT LITERATURE

Patent Document 1: JP 2000-277116 A
Patent Document 2: JP 2000-156229 A
Patent Document 3: JP 2001-185141 A

### SUMMARY OF INVENTION

### TECHNICAL PROBLEM

The present invention aims at solving at least one of the aforementioned problems in the art, and providing a negative electrode for a lithium ion secondary battery with a high packing density, and a method for producing the active material for the negative electrode.

### SOLUTION TO PROBLEM

The negative electrode for a lithium ion secondary battery according to the present invention comprises an active material containing a lithium titanium complex oxide having a composition expressed as Li₄Ti_{5-x-y}FeₓV_{y}O₁₂ where 0<x≤0.3, 0<y≤0.05, or Li₄Ti_{5-x-z}FeₓB_{z}O₁₂ where 0<x≤0.3, 0<z≤0.3. The method for producing the active material for the negative electrode according to the present invention has the features defined in claim 6. By substituting a portion of Ti element of Li₄Ti₅₋ₓFeₓO₁₂ where 0<x≤0.3 with V element or B element, the primary particle size of the lithium titanium complex oxide increases, thereby increasing the packing density in the electrode and improving the capacity density as an electrode.

### ADVANTAGEOUS EFFECTS OF INVENTION

According to the present invention, the primary particle size of a lithium titanium complex oxide can be increased by substituting a portion of Ti element of Li₄Ti₅₋ₓFeₓO₁₂ where 0<x≤0.3 with V element or B element. Therefore, it is possible to realize a lithium ion secondary battery with a large capacity density.

### BRIEF DESCRIPTION OF DRAWINGS

FIG. **1** shows X-ray diffraction patterns of lithium titanium complex oxides of Examples 1-15 and Reference Examples 1-14.
FIG. **2A** is a graph showing the relationship between the average particle size and the amount of Fe added for lithium titanium complex oxides of Examples 1-15 and Reference Examples 2-5.
FIG. **2B** is a graph showing the relationship between the average particle size and the amount of B or V added for lithium titanium complex oxides of Reference Examples 1, 6-7 and 9-12.
FIG. **3A** is a graph showing the relationship between the pressed density and the amount of Fe added for lithium titanium complex oxides of Examples 1-15 and Reference Examples 2-5.
FIG. **3B** is a graph showing the relationship between the pressed density and the amount of B or V added for lithium titanium complex oxides of Reference Examples 1, 6-7 and 9-12.
FIG. **4A** is a graph showing the relationship between the available discharge capacity and the amount of Fe added for batteries containing the active materials of Examples 1-15 and Reference Examples 2-5.
FIG. **4B** is a graph showing the relationship between the available discharge capacity and the amount of B or V added for batteries containing the active materials of Reference Examples 1, 6-7 and 9-12.
FIG. **5A** is a graph showing the relationship between the electrode capacity density and the amount of Fe added for batteries containing the active materials of Examples 1-15 and Reference Examples 2-5.
FIG. **5B** is a graph showing the relationship between the electrode capacity density and the amount of B or V added for batteries containing the active materials of Reference Examples 1, 6-7 and 9-12.

### DESCRIPTION OF EMBODIMENTS

Negative electrodes for lithium ion secondary batteries according to the present invention will now be described with reference to the drawings.

### First Embodiment

A negative electrode for a lithium ion secondary battery according to a first embodiment of the present invention will be described. The negative electrode for a lithium ion secondary battery of the present embodiment comprises an active material containing a lithium titanium complex oxide having a composition expressed as Li₄Ti_{5-x-y}FeₓV_{y}O₁₂ where 0<x≤0.3, 0<y≤0.05. The lithium titanium complex oxide of the present embodiment is a compound in which a portion of Ti element of Li₄Ti₅₋ₓFeₓO₁₂ where 0<x≤0.3 is further substituted with V element. Herein, x and y represent the amounts of substitution of Fe element and V element, respectively.

V element provides an effect of increasing the particle size of the lithium titanium complex oxide. Conventional lithium titanium complex oxide materials typically have primary particle sizes of 1 µm or less. Therefore, it was not possible to realize a large packing density when the electrode is formed by using such a lithium titanium complex oxide material.

In contrast, the present inventors have found that substituting a portion of Ti element with V element increases the primary particle size, thereby improving the packing property as an electrode of a lithium ion secondary battery. Thus, by further substituting Ti element with V element in a lithium titanium complex oxide having a composition expressed as Li₄Ti₅₋ₓFeₓO₁₂ where 0<x≤0.3, it is possible to realize a lithium titanium complex oxide with a large primary particle size. Therefore, when the lithium titanium complex oxide of the present embodiment is used in a negative electrode for a lithium ion secondary battery, it is possible to realize a lithium ion secondary battery with a high capacity.

The lithium titanium complex oxide contained in the negative electrode for a lithium ion secondary battery of the present embodiment has a spinel crystalline structure. The crystalline structure can be confirmed by X-ray diffraction (XRD).

The amount x of Fe element added preferably satisfies 0<x≤0.3 in the lithium titanium complex oxide of the present embodiment. It has been shown by Patent Document 3 that a lithium titanium complex oxide exhibits a desirable electronic conductivity only if a very small portion of Ti element is substituted with Fe. Therefore, x only needs to be greater than 0. An in-depth study by the present inventors has revealed that when x increases, the available discharge capacity of a lithium ion secondary battery using a negative electrode of the present embodiment tends to decrease, and it has been shown that the available discharge capacity decreases significantly when x exceeds 0.3. As will be discussed in the Examples section below, it is more preferred that the amount x of Fe element added satisfies 0<x≤0.1 in view of the electrode capacity density.

The amount of V element added is preferably 0<y≤0.05. With a portion of Ti substituted with V element, it is possible to obtain the effect of increasing the primary particle size. The reason why the primary particle size increases is not clear. It is nevertheless believed that since the melting point of V₂O₅, which is the V source, is relatively low at 690°C, and V₂O₅ is therefore in a molten state during baking, the diffusion of the V source is very fast, thereby facilitating the growth of particles of the lithium titanium complex oxide. On the other hand, if the amount of V element added exceeds 0.05, there occurs an oxide phase containing no Ti element, and it is then difficult to obtain a single phase of a lithium titanium complex oxide of the spinel crystalline structure. This can be confirmed by X-ray diffraction (XRD) measurement.

A lithium ion secondary battery using a negative electrode of the present embodiment with large amounts x and y of substitution of Fe element and V element shows a decrease in the available discharge capacity. That is, the available discharge capacity decreases in accordance with the amounts of substitution of Fe element and V element. However, when a lithium titanium complex oxide of the present embodiment is used in a negative electrode for a lithium ion secondary battery, the packing density in the electrode is increased, thereby improving the capacity density as an electrode, due to the effect of increasing the primary particle size, within the aforementioned range for the amounts x and y of substitution.

The lithium titanium complex oxide of the present embodiment may be in the form of primary particles or secondary particles, each being an aggregation of primary particles. In either case, it is preferred that the average particle size d (µm) of the primary particles is 1≤d≤5.

The average particle size of primary particles tends to increase as the amount of substitution of V element increases. Depending on the application, the average particle size d of the lithium titanium complex oxide may be 5 µm or more.

The lithium titanium complex oxide contained in the negative electrode for a lithium ion secondary battery of the present embodiment can be synthesized by mixing and baking a compound containing the constituent elements. Specifically, for example, the production can be done through a step of weighing the Li source, the titanium oxide, the Fe source and the V source to such a proportion that Li, Ti, Fe and V will be in a ratio indicated by the composition formula and uniformly mixing the weighed materials together, and a step of baking the mixture. As used herein, "uniformly" means that there is no significant unevenness in the distribution on the level of particles of the material.

The Li source may be LiOH or a hydrate thereof, Li₂CO₃, Li₂SO₄, LiF, Li₂O, or the like. While the LiOH hydrate is typically a monohydrate (LiOH·H₂O), LiOH hydrates of other levels of water content may by used. In view of the reaction temperature and the possibility of impurity residue, it is preferred to use LiOH or a hydrate thereof or Li₂CO₃. The titanium oxide may be one that has the rutile or anatase crystalline structure. In view of the reactivity, it is preferred to use one that has the anatase crystalline structure. The Fe source may be FeO, Fe₂O₃, Fe₃O₄, FeO₂, α-FeOOH, Fe(OH)₃, FeSO₄, Fe₂(SO₄)₃, or the like. In view of the reaction temperature, it is preferred to use Fe₂O₃ or α-FeOOH. It is preferred to use V₂O₅ as the V source.

The baking may be done in an air atmosphere, an oxygen atmosphere, or an inert gas atmosphere such as nitrogen or argon. The baking temperature depends on the Li source, the titanium oxide, the Fe source and the V source used. Where the respective preferred materials described above are used for the Li source, the titanium oxide, the Fe source and the V source, it is possible to obtain a lithium titanium complex oxide having a composition expressed as Li₄Ti_{5-x-y}FeₓV_{y}O₁₂ where 0<x≤0.3, 0<y≤0.05 by baking the mixture at a temperature of about 700°C or more and about 1000°C or less.

With the negative electrode for a lithium ion secondary battery of the present embodiment, since the lithium titanium complex oxide has a larger primary particle size than Li₄Ti₅₋ₓFeₓO₁₂ where 0<x≤0.3 and since the packing density of the active material at the negative electrode can be increased, it is possible to realize a lithium ion secondary battery with a high capacity.

### Second Embodiment

A negative electrode for a lithium ion secondary battery according to a second embodiment of the present invention will be described. The negative electrode for a lithium ion secondary battery of the present embodiment comprises an active material containing a lithium titanium complex oxide having a composition expressed as Li₄Ti_{5-x-z}FeₓB_{z}O₁₂ where 0<x≤0.3, 0<z≤0.3. The lithium titanium complex oxide of the present embodiment is a compound in which a portion of Ti element of Li₄Ti₅₋ₓFeₓO₁₂ where 0<x≤0.3 is further substituted with B element. Herein, x and z represent the amounts of substitution of Fe element and B element, respectively.

B element, like V element, has the effect of increasing the particle size of the lithium titanium complex oxide. The present inventors have found that substituting a portion of Ti element with B element, as with V element, increases the primary particle size of the lithium titanium complex oxide, thereby improving the packing property as an electrode of a lithium ion secondary battery. Thus, by further substituting Ti element with B element in a lithium titanium complex oxide having a composition expressed as Li₄Ti₅₋ₓFeₓO₁₂ where 0<x≤0.3, it is possible to realize a lithium titanium complex oxide with a large primary particle size. Therefore, when the lithium titanium complex oxide of the present embodiment is used as a negative electrode for a lithium ion secondary battery, it is possible to realize a lithium ion secondary battery with a high capacity.

As in the first embodiment, the lithium titanium complex oxide contained in the negative electrode for a lithium ion secondary battery of the present embodiment has a spinel crystalline structure. The crystalline structure can be confirmed by X-ray diffraction (XRD).

The amount x of Fe element added preferably satisfies 0<x≤0.3 in the lithium titanium complex oxide of the present embodiment. This is based on a reason similar to that of the first embodiment.

The amount z of B element added is preferably 0<z≤0.3. With a portion of Ti substituted with B element, it is possible to obtain the effect of increasing the primary particle size. The reason why the primary particle size increases is not clear. It is nevertheless believed that since the melting point of B₂O₃, which is the B source, is relatively low at 480°C, and B₂O₃ is therefore in a molten state during baking, the diffusion of the B source is very fast, thereby facilitating the growth of particles of the lithium titanium complex oxide. It is believed that also when HBO₃ is used as the B source, the growth of particles of the lithium titanium complex oxide is facilitated similarly because HBO₃ decomposes into B₂O₃ at around 169°C.

On the other hand, if the amount of B element added exceeds 0.3, there occurs an oxide phase containing no Ti element, and it is then difficult to obtain a single phase of a lithium titanium complex oxide of the spinel crystalline structure. This can be confirmed by X-ray diffraction (XRD) measurement.

A lithium ion secondary battery using a negative electrode of the present embodiment with large amounts x and z of substitution of Fe element and B element shows a decrease in the available discharge capacity. That is, the available discharge capacity decreases in accordance with the amounts of substitution of Fe element and B element. However, when a lithium titanium complex oxide of the present embodiment is used in a negative electrode for a lithium ion secondary battery, the packing density in the electrode is increased, thereby improving the capacity density as an electrode, due to the effect of increasing the primary particle size, within the aforementioned range for the amounts x and z of substitution.

The lithium titanium complex oxide of the present embodiment may be in the form of primary particles or secondary particles, each being an aggregation of primary particles. In either case, it is preferred that the average particle size d (µm) of the primary particles is 1≤d≤11. The average particle size of primary particles tends to increase as the amount of substitution of V element increases. Depending on the application, the average particle size d of the lithium titanium complex oxide may be 11 µm or more.

As in the first embodiment, the lithium titanium complex oxide contained in the negative electrode for a lithium ion secondary battery of the present embodiment can also be synthesized by mixing and baking a compound containing the constituent elements. Specifically, for example, the production can be done through a step of weighing the Li source, the titanium oxide, the Fe source and the B source to such a proportion that Li, Ti, Fe and B will be in a ratio indicated by the composition formula and uniformly mixing the weighed materials together, and a step of baking the mixture.

The Li source may be LiOH or a hydrate thereof, Li₂CO₃, Li₂SO₄, LiF, Li₂O, or the like. While the LiOH hydrate is typically a monohydrate (LiOH·H₂O), LiOH hydrates of other levels of water content may by used. In view of the reaction temperature and the possibility of impurity residue, it is preferred to use LiOH or a hydrate thereof or Li₂CO₃. The titanium oxide may be one that has the rutile or anatase crystalline structure. In view of the reactivity, it is preferred to use one that has the anatase crystalline structure. The Fe source may be FeO, Fe₂O₃, Fe₃O₄, FeO₂, α-FeOOH, Fe(OH)₃, FeSO₄, Fe₂(SO₄)₃, or the like. In view of the reaction temperature, it is preferred to use Fe₂O₃ or α-FeOOH. It is preferred to use H₃BO₃ or B₂O₃ the B source.

The baking may be done in an air atmosphere, an oxygen atmosphere, or an inert gas atmosphere such as nitrogen or argon. The baking temperature depends on the Li source, the titanium oxide, the Fe source and the B source used. Where the respective preferred materials described above are used for the Li source, the titanium oxide, the Fe source and the B source, it is possible to obtain a lithium titanium complex oxide having a composition expressed as Li₄Ti_{5-x-z}FeₓB_{z}O₁₂ where 0<x≤0.3, 0<z≤0.3 by baking the mixture at a temperature of about 700°C or more and about 1000°C or less.

With the negative electrode for a lithium ion secondary battery of the present embodiment, since the lithium titanium complex oxide has a larger primary particle size than Li₄Ti₅₋ₓFeₓO₁₂ where 0<x≤0.3 and since the packing density of the active material at the negative electrode can be increased, it is possible to realize a lithium ion secondary battery with a high capacity.

### EXAMPLES

Hereinafter, results of synthesizing active materials for the negative electrode, which are examples of the present invention, and examining various properties thereof, will be described.

### 1. Synthesis

### Example 1

The material powders of LiOH·H₂O, TiO₂, Fe₂O₃ and V₂O₅ were weighed so that the molar ratio Li/Ti/Fe/V is 4/(5-x-y)/x/y (x=0.01, y=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 2

The material powders of LiOH·H₂O, TiO₂, Fe₂O₃ and V₂O₅ were weighed so that the molar ratio Li/Ti/Fe/V is 4/(5-x-y)/x/y (x=0.01, y=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 3

The material powders of LiOH·H₂O, TiO₂, Fe₂O₃ and V₂O₅ were weighed so that the molar ratio Li/Ti/Fe/V is 4/(5-x-y)/x/y (x=0.05, y=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 4

The material powders of LiOH·H₂O, TiO₂, Fe₂O₃ and V₂O₅ were weighed so that the molar ratio Li/Ti/Fe/V is 4/(5-x-y)/x/y (x=0.3, y=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 5

The material powders of LiOH·H₂O, TiO₂, Fe₂O₃ and V₂O₅ were weighed so that the molar ratio Li/Ti/Fe/V is 4/(5-x-y)/x/y (x=0.3, y=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 6

The material powders of LiOH·H₂O, TiO₂, Fe₂O₃ and HBO₃ were weighed so that the molar ratio Li/Ti/Fe/B is 4/(5-x-z)/x/z (x=0.01, z=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 7

The material powders of LiOH·H₂O, TiO₂, Fe₂O₃ and HBO₃ were weighed so that the molar ratio Li/Ti/Fe/B is 4/(5-x-z)/x/z (x=0.01, z=0.3), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 8

The material powders of LiOH·H₂O, TiO₂, Fe₂O₃ and HBO₃ were weighed so that the molar ratio Li/Ti/Fe/B is 4/(5-x-z)/x/z (x=0.05, z=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 9

The material powders of LiOH·H₂O, TiO₂, Fe₂O₃ and HBO₃ were weighed so that the molar ratio Li/Ti/Fe/B is 4/(5-x-z)/x/z (x=0.3, z=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 10

The material powders of LiOH·H₂O, TiO₂, Fe₂O₃ and HBO₃ were weighed so that the molar ratio Li/Ti/Fe/B is 4/(5-x-z)/x/z (x=0.3, z=0.3), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 11

The material powders of LiOH·H₂O, TiO₂, Fe₂O₃ and HBO₃ were weighed so that the molar ratio Li/Ti/Fe/B is 4/(5-x-z)/x/z (x=0.1, z=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 12

The material powders of LiOH·H₂O, TiO₂, Fe₂O₃ and HBO₃ were weighed so that the molar ratio Li/Ti/Fe/B is 4/(5-x-z)/x/z (x=0.1, z=0.3), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 13

The material powders of LiOH·H₂O, TiO₂, Fe₂O₃ and V₂O₅ were weighed so that the molar ratio Li/Ti/Fe/V is 4/(5-x-y)/x/y (x=0.1, y=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 14

The material powders of LiOH·H₂O, TiO₂, Fe₂O₃ and V₂O₅ were weighed so that the molar ratio Li/Ti/Fe/V is 4/(5-x-y)/x/y (x=0.1, y=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Example 15

The material powders of LiOH·H₂O, TiO₂, Fe₂O₃ and V₂O₅ were weighed so that the molar ratio Li/Ti/Fe/V is 4/(5-x-y)/x/y (x=0.05, y=0.02), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 1

The material powders of LiOH·H₂O and TiO₂ were weighed so that the molar ratio Li/Ti is 4/5, and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 2

The material powders of LiOH·H₂O, TiO₂ and Fe₂O₃ were weighed so that the molar ratio Li/Ti/Fe is 4/(5-x)/x (x=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 3

The material powders of LiOH·H₂O, TiO₂ and Fe₂O₃ were weighed so that the molar ratio Li/Ti/Fe is 4/(5-x)/x (x=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 4

The material powders of LiOH·H₂O, TiO₂ and Fe₂O₃ were weighed so that the molar ratio Li/Ti/Fe is 4/(5-x)/x (x=0.1), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 5

The material powders of LiOH·H₂O, TiO₂ and Fe₂O₃ were weighed so that the molar ratio Li/Ti/Fe is 4/(5-x)/x (x=0.3), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 6

The material powders of LiOH·H₂O, TiO₂ and VO₅ were weighed so that the molar ratio Li/Ti/V is 4/(5-y)/y (y=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 7

The material powders of LiOH·H₂O, TiO₂ and VO₅ were weighed so that the molar ratio Li/Ti/V is 4/(5-y)/y (y=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 8

The material powders of LiOH·H₂O, TiO₂ and VO₅ were weighed so that the molar ratio Li/Ti/V is 4/(5-y)/y (y=0.1), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 9

The material powders of LiOH·H₂O, TiO₂ and HBO₃ were weighed so that the molar ratio Li/Ti/B is 4/(5-z)/z (z=0.01), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 10

The material powders of LiOH·H₂O, TiO₂ and HBO₃ were weighed so that the molar ratio Li/Ti/B is 4/(5-z)/z (z=0.05), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 11

The material powders of LiOH·H₂O, TiO₂ and HBO₃ were weighed so that the molar ratio Li/Ti/B is 4/(5-z)/z (z=0.1), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 12

The material powders of LiOH·H₂O, TiO₂ and HBO₃ were weighed so that the molar ratio Li/Ti/B is 4/(5-z)/z (z=0.3), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 13

The material powders of LiOH·H₂O, TiO₂ and HBO₃ were weighed so that the molar ratio Li/Ti/B is 4/(5-z)/z (z=0.75), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### Reference Example 14

The material powders of LiOH·H₂O, TiO₂ and α-FeOOH were weighed so that the molar ratio Li/Ti/Fe is 4/(5-x)/x (x=0.3), and mixed together in a mortar. The material TiO₂ used was one having an anatase crystalline structure and an average particle size of about 0.3 µm.

The mixture of the material powders was put in an Al₂O₃ crucible and baked in an electric furnace in an air atmosphere. The baking temperature was 850°C, and the baking temperature holding time was 12 hours.

The baked material was taken out of the crucible and crushed in a mortar to obtain an intended lithium titanium complex oxide.

### 2. Confirmation Of Crystalline Structure

Powder X-ray diffraction (XRD) measurements were done in order to confirm the crystalline structure of the lithium titanium complex oxides of Examples 1-15 and Reference Examples 1-14. An XRD measurement apparatus from Rigaku Corporation was used for the measurements.

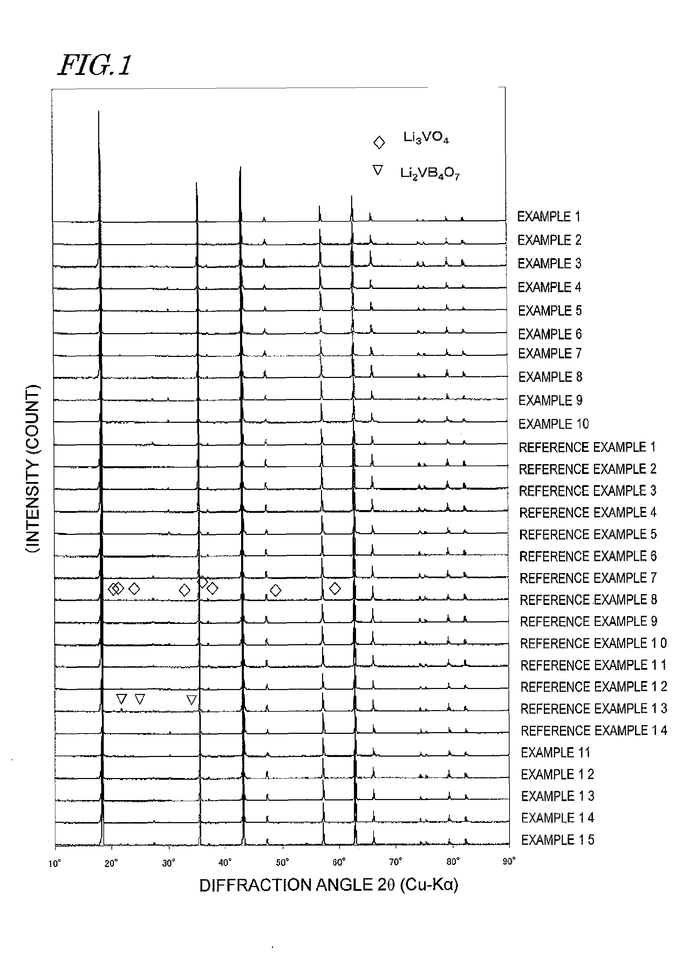

FIG. **1** shows the profiles of the XRD measurements. Table 1 shows the amounts x, y and z of Fe, V and B added for all examples of the present invention and reference examples.

**Table 1**

| | Amount of Fe added | Amount of V added | Amount of B added |
|---|---|---|---|
| | (x) | (y) | (z) |
| Example 1 | 0.01 | 0.01 | 0 |
| Example 2 | 0.01 | 0.05 | 0 |
| Example 3 | 0.05 | 0.05 | 0 |
| Example 4 | 0.3 | 0.01 | 0 |
| Example 5 | 0.3 | 0.05 | 0 |
| Example 6 | 0.01 | 0 | 0.01 |
| Example 7 | 0.01 | 0 | 0.3 |
| Example 8 | 0.05 | 0 | 0.05 |
| Example 9 | 0.3 | 0 | 0.01 |
| Example 10 | 0.3 | 0 | 0.3 |
| Reference Example 1 | 0 | 0 | 0 |
| Reference Example 2 | 0.01 | 0 | 0 |
| Reference Example 3 | 0.05 | 0 | 0 |
| Reference Example 4 | 0.1 | 0 | 0 |
| Reference Example 5 | 0.3 | 0 | 0 |
| Reference Example 6 | 0 | 0.01 | 0 |
| Reference Example 7 | 0 | 0.05 | 0 |
| Reference Example 8 | 0 | 0.1 | 0 |
| Reference Example 9 | 0 | 0 | 0.01 |
| Reference Example 10 | 0 | 0 | 0.05 |
| Reference Example 11 | 0 | 0 | 0.1 |
| Reference Example 12 | 0 | 0 | 0.3 |
| Reference Example 13 | 0 | 0 | 0.75 |
| Reference Example 14 | 0.3 | 0 | 0 |
| Example 11 | 0.1 | 0 | 0.01 |
| Example 12 | 0.1 | 0 | 0.3 |
| Example 13 | 0.1 | 0.01 | 0 |
| Example 14 | 0.1 | 0.05 | 0 |
| Example 15 | 0.05 | 0.02 | 0 |

These results confirmed that the lithium titanium complex oxides of Examples 1-15 and Reference Examples 1-7, 9-12 and 14 had a single spinel phase. The lithium titanium complex oxide of Reference Example 8 contains a small amount of an Li₃VO₄ phase, in addition to the spinel phase. The lithium titanium complex oxide of Reference Example 13 contains a small amount of an Li₂B₄O₇ phase, in addition to the spinel phase.

These results showed that it is possible to obtain a lithium titanium complex oxide including a single spinel phase if the composition of the lithium titanium complex oxide is in the ranges of Examples 1-15 and Reference Examples 1-7, 9-12 and 14, i.e., 0<x≤0.3, 0<y≤0.05, 0<z≤0.3. It was also shown that it is not possible to obtain a single spinel phase when the amount y of V added is excessive as in Reference Example 8 or when the amount z of B added is excessive as in Reference Example 13.

With the measurement results of Reference Example 5 and Reference Example 14 being substantially equal to each other, it was shown that the same lithium titanium complex oxide is obtained whether Fe₂O₃ or α-FeOOH is used as the Fe source.

### 3. Confirmation Of Average Particle size

In the examples of the present invention, the average particle size of the primary particles was evaluated in terms of the "average particle size d" as defined below. We arbitrarily selected 30 particles from a SEM image to measure the primary particle sizes, and calculated the average thereof, thus estimating the "average particle size d".

Typically, the "cumulative average particle size d₅₀" in granular variation measurement is often used as the average particle size. However, the granular variation measurement is a measurement of the size of aggregated particles (secondary particles), as opposed to the size of primary particles. There is no correlation between the size of primary particles and the size of secondary particles. Therefore, the "average particle size d", which is a unit representing the size of primary particles, is suitable for demonstrating the effects from the examples of the present invention.

A scanning electron microscope (SEM) was used to examine the "average particle size d" for the lithium titanium complex oxides of Examples 1-15 and Reference Examples 1-7 and 9-12, which had a single spinel phase. An apparatus from Hitachi High-Technologies Corporation was used.

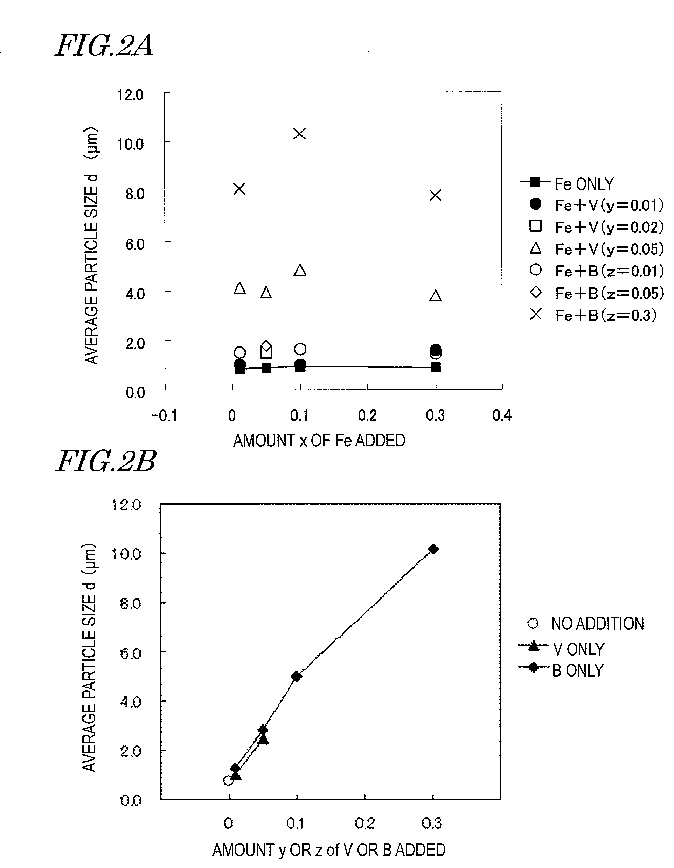

Table 2 shows the average particle size d for the lithium titanium complex oxides of Examples 1-15 and Reference Examples 1-7 and 9-12, calculated from SEM images. FIG. **2A** shows the relationship between the average particle size d and the amount of Fe added for the lithium titanium complex oxides of Examples 1-15 and Reference Examples 2-5, and FIG. **2B** shows the relationship between the average particle size d and the amount of V or B added for the lithium titanium complex oxides of Reference Examples 1, 6-7 and 9-12.

**Table 2**

| | Average particle size d | Pressed density | Available discharge capacity | Electrode capacity density ρ |
|---|---|---|---|---|
| | µm | g/cm³ | mAh/g | mAh/cm³ |
| Example 1 | 1.02 | 2.38 | 164 | 391 |
| Example 2 | 4.12 | 2.72 | 156 | 424 |
| Example 3 | 3.93 | 2.66 | 147 | 391 |
| Example 4 | 1.61 | 2.38 | 145 | 345 |
| Example 5 | 3.83 | 2.71 | 136 | 368 |
| Example 6 | 1.50 | 2.35 | 164 | 385 |
| Example 7 | 8.10 | 2.72 | 130 | 355 |
| Example 8 | 1.78 | 2.42 | 156 | 378 |
| Example 9 | 1.46 | 2.46 | 141 | 347 |
| Example 10 | 7.83 | 2.71 | 122 | 330 |
| Reference Example 1 | 0.77 | 2.09 | 165 | 339 |
| Reference Example 2 | 0.85 | 2.12 | 166 | 351 |
| Reference Example 3 | 0.87 | 2.13 | 164 | 348 |
| Reference Example 4 | 0.92 | 2.21 | 162 | 359 |
| Reference Example 5 | 0.87 | 2.17 | 153 | 333 |
| Reference Example 6 | 1.01 | 2.36 | 164 | 387 |
| Reference Example 7 | 2.47 | 2.57 | 150 | 387 |
| Reference Example 9 | 1.30 | 2.28 | 164 | 373 |
| Reference Example 10 | 2.84 | 2.40 | 156 | 375 |
| Reference Example 11 | 4.99 | 2.68 | 155 | 414 |
| Reference Example 12 | 10.16 | 2.72 | 140 | 380 |
| Example 11 | 1.62 | 2.59 | 162 | 420 |
| Example 12 | 10.32 | 2.88 | 138 | 398 |
| Example 13 | 1.03 | 2.44 | 164 | 401 |
| Example 14 | 4.81 | 2.73 | 157 | 428 |
| Example 15 | 1.50 | 2.74 | 164 | 448 |

The average particle size d of the lithium titanium complex oxides of Reference Examples 1-5 is about 0.8 µm to about 0.9 µm, whereas the average particle size d of the lithium titanium complex oxides of Examples 1-15 and Reference Examples 6-7 and 9-12 is larger and about 1 µm to about 11 µm. These results showed that substituting Ti element only with Fe element provides no significant change to the primary particle size, whereas substituting Ti element with B element or V element provides the effect of increasing the primary particle size.

### 4. Measurement Of Pressed Density

For the lithium titanium complex oxides of Examples 1-15 and Reference Examples 1-7 and 9-12, the pressed density was measured as a measure of the packing property when made into an electrode. A powder resistance measurement system from Mitsubishi Chemical Analytech Co., Ltd. was used for the measurement. The density under an applied pressure of 64 MPa was determined as the pressed density.

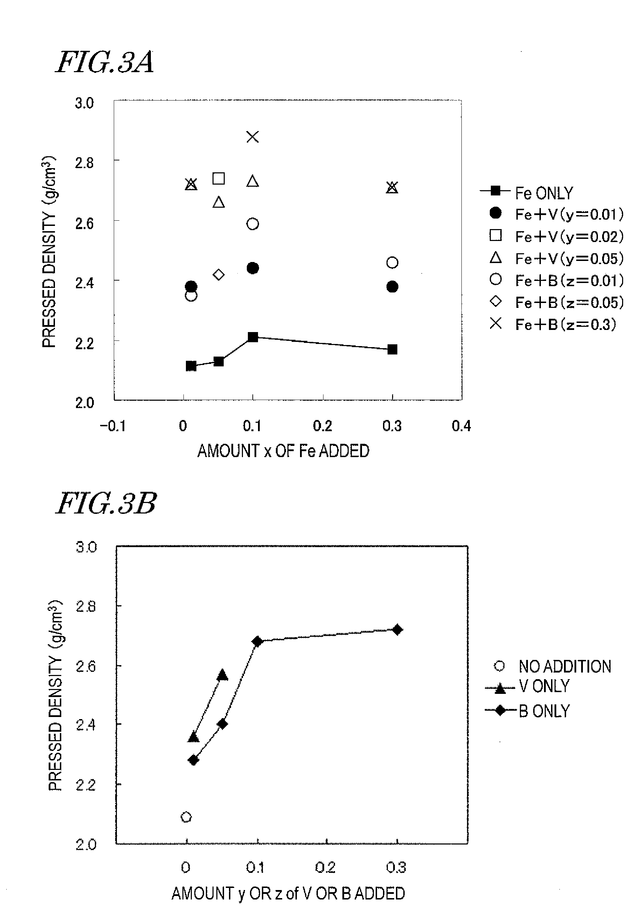

Table 2 shows the measurement results. FIG. 3A shows the relationship between the pressed density measurement results and the amount of Fe added for Examples 1-15 and Reference Examples 2-5. FIG. **3B** shows the relationship between the pressed density measurement results and the amount of V or B added for Reference Examples 1, 6-7 and 9-12.

As compared with the pressed densities of Reference Examples 1-5 from about 2.1 g/cm³ to about 2.2 g/cm³, those of Examples 1-15 and Reference Examples 6-7 and 9-12 were larger and from about 2.3 g/cm³ to about 2.9 g/cm³.

The results of the average particle size and the pressed density showed the tendency that larger average particle sizes lead to larger pressed densities.

### 5. Production Of Electrode

Electrodes were produced using the lithium titanium complex oxides of Examples 1-15 and Reference Examples 1-7 and 9-12 as the active material. The active material, a conductive material and a binder were weighed to a weight ratio of 85/10/5, and mixed together in a mortar. Acetylene black and PTFE were used as the conductive material and the binder, respectively. After mixing, the mixture was rolled out with a roller and punched into pellet-shaped electrodes.

### 6. Production Of Battery

Batteries were produced using these electrodes in order to examine properties as a negative electrode for a lithium ion secondary battery. Typically, in a lithium ion secondary battery, a lithium transition metal complex oxide (typically containing a transition metal such as Co, Mn or Ni) such as LiCoO₂ is used as the positive electrode active material. In the examples of the present invention, however, a metal Li was used, instead of a common positive electrode active material, in the opposite pole, in order to examine the properties of the negative electrode active material per se, independent of the positive electrode active material. Methods like this are common in evaluating active materials.

Coin batteries were produced. Each of the electrodes produced in accordance with the examples and the reference examples was stacked with a separator impregnated with electrolyte and a metal Li plate in this order, and sealed in a coin-shaped case, obtaining a battery. The separator was a three-layer separator including a PE microporous membrane from Asahi Kasei E-materials Corporation and a PP non-woven fabric from Tapyrus Co., Ltd., layered together in the order PP/PE/PP. The electrolyte included 1 mol/L of LiPF₆ dissolved in a solvent mixed so that EC/EMC=1/3.

Batteries produced using the lithium titanium complex oxides of Examples 1-15 and Reference Examples 1-7 and 9-12 as active materials will be referred to as batteries containing the active materials of Examples 1-15 and Reference Examples 1-7 and 9-12, respectively.

### 7. Evaluation Of Available Discharge Capacity

Each produced battery was charged and then discharged so as to examine the available discharge capacity thereof. A charge-discharge system from Nagano Co., Ltd. was used for the charge-discharge test. The charge-discharge test was performed so that the voltage range was from 1 V to 3 V and the current rate was 0.02 C rate. Herein, 1 C rate is defined as a current value representing the discharge rate over 1 hour, and 0.02 C rate is the current value that is 0.02 time 1 C rate, i.e., a current value representing the discharge rate over 50 hours.

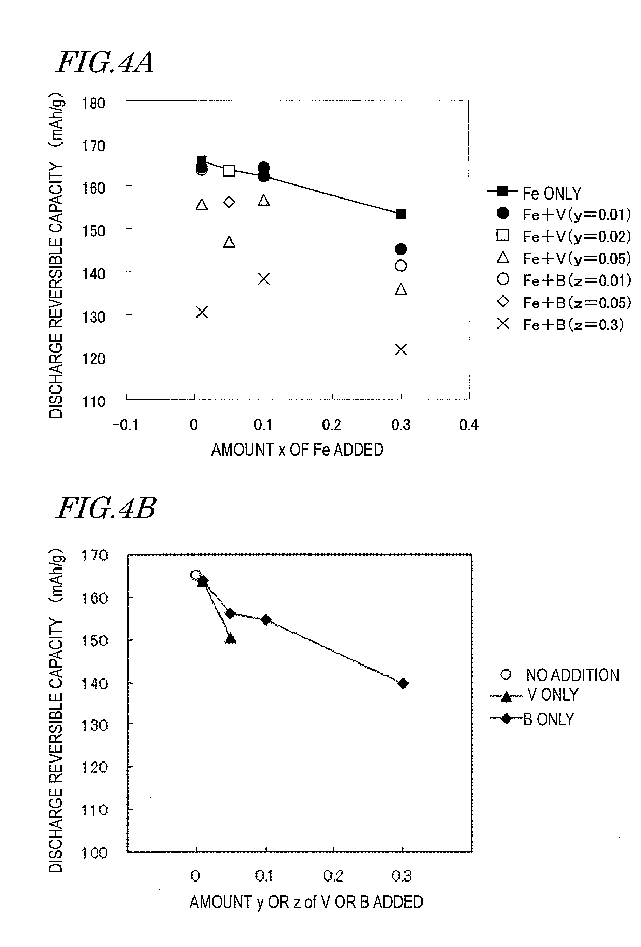

Table 2 shows the available discharge capacity measurement results obtained as described above for the batteries containing the active materials of Examples 1-15 and Reference Examples 1-7 and 9-12. FIG. **4A** shows the relationship between the measurement results and the amount of Fe added for Examples 1-15 and Reference Examples 2-5. FIG. **4B** shows the relationship between the measurement results and the amount of V or B added for Reference Example 1 and Reference Examples 6-7 and 9-12.

As can be seen from FIG. **4B** and Table 2, the available discharge capacity is highest for Reference Example 1, among Reference Example 1 and Reference Examples 6-7 and 9-12. From the measurement results for batteries containing the active materials of Reference Examples 1-5, it can be seen that the available discharge capacity decreases as the amount x by which Ti element is substituted with Fe element increases. From the results for batteries containing the active materials of Reference Examples 6-7 and 9-12, it can be seen that the available discharge capacity decreases as the amount y or z by which Ti element is substituted with V element or B element increases. Moreover, the measurement results for batteries containing the active materials of Examples 1-15 showed that for those in which Ti element was further substituted with V element or B element in addition to substitution with Fe element, the available discharge capacity was further decreased by the V or B substitution in addition to a decrease by the Fe substitution.

### 8. Evaluation Of Electrode Capacity Density

The capacity density per volume of an electrode directly contributes to the energy density of the battery, and an improvement thereof has been sought for. The electrode capacity density is expressed as the product between the density of the active material in the electrode, the weight capacity density of the active material, and the discharge average voltage. The pressed density of the active material can be used as one measure of the density of the active material in the electrode, i.e., the packing property. The weight capacity density of the active material is the available discharge capacity measured as described above. Thus, in the examples of the present invention, as an evaluation measure of the electrode capacity density, the "electrode capacity density p" is defined and calculated as the product between the pressed density and the available discharge capacity.

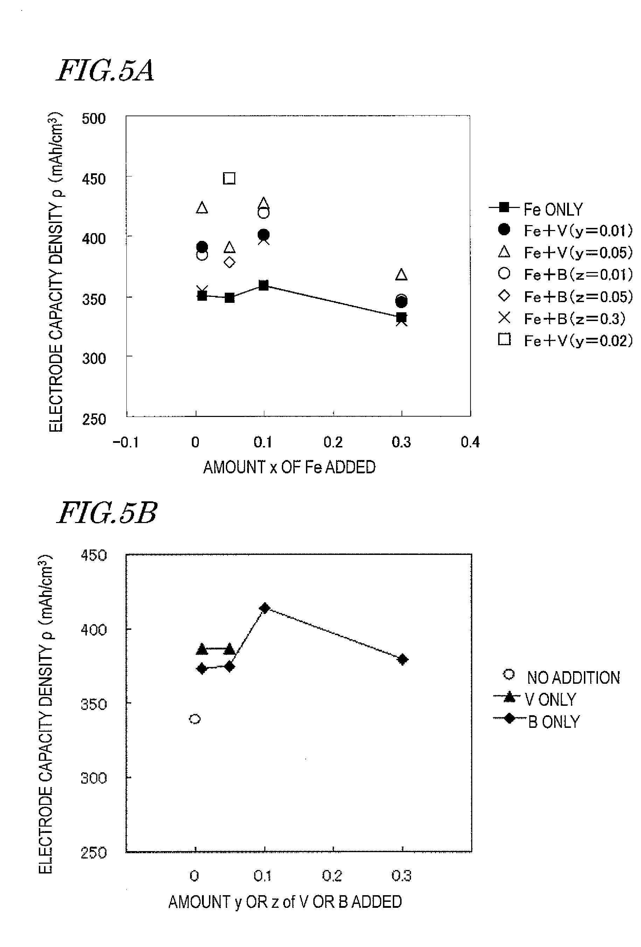

Table 2 shows the results of the "electrode capacity density p" for batteries containing the active materials of Examples 1-15 and Reference Examples 1-7 and 9-12 obtained as described above. FIG. **5A** shows the relationship between the calculation results and the amount of Fe added for the batteries of Examples 1-15 and Reference Examples 2-5. FIG. **5B** shows the relationship between the calculation results and the amount of V or B added for the batteries of Reference Examples 1, 6-7 and 9-12.

It can be seen from FIG. **5A** that the "electrode capacity density p" is greater than that of the battery containing the active material of Reference Example 1 when the amount x of Fe element added is greater than 0 and less than or equal to 0.1. It can also be seen that the "electrode capacity density ρ" decreases for batteries containing the active materials of the examples when the amount x of Fe element added is 0.3. It is believed that this is because the available discharge capacity decreases significantly when the amount x of Fe element added is 0.3 (FIG. **4A**). Therefore, it can be seen that it is more preferred that the amount x of Fe element added satisfies 0<x≤0.1.

It was also shown that the "electrode capacity densities p" of batteries containing the active materials of Examples 1-15 with B element or V element added thereto, in addition to Fe element, were generally equal to or greater than those of Reference Examples 2-5 with no B element or V element added thereto. It is believed that this is because although the available discharge capacity decreases in accordance with the amounts of B element and V element added, the effect of increasing the pressed density has a significant contribution. Therefore, the "electrode capacity densities p" of the batteries containing the active materials of Examples 4, 5 and 9, in which B element or V element is further contained, are greater than that of Reference Example 1, even though the amount x of Fe element added is 0.3. The results of Reference Examples 6-7 and 9-12, with respect to Reference Example 1, also have a similar tendency.

### INDUSTRIAL APPLICABILITY

Negative electrodes for lithium ion secondary batteries according to the present invention give a high capacity density, and are useful as negative electrodes for lithium ion secondary batteries for mobile applications. They can also be used for applications such as large batteries, electric vehicles, etc.

## Claims

1. A negative electrode for a lithium ion secondary battery, comprising an active material containing a lithium titanium complex oxide,
**characterized in that**
the lithium titanium complex oxide has a composition expressed as Li₄Ti_{5-x-y}FeₓV_{y}O₁₂ where 0<x≤0.3, 0<y≤0.05.

2. A negative electrode for a lithium ion secondary battery, comprising an active material containing a lithium titanium complex oxide,
**characterized in that**
the lithium titanium complex oxide has a composition expressed as Li₄Ti_{5-x-z}FeₓB_{z}O₁₂ where 0<x≤0.3, 0<z≤0.3.

3. The negative electrode for a lithium ion secondary battery according to claim 1, wherein an average particle size of primary particles of the lithium titanium complex oxide is 1 µm or more and 5 µm or less.

4. The negative electrode for a lithium ion secondary battery according to claim 2, wherein an average particle size of primary particles of the lithium titanium complex oxide is 1 µm or more and 11 µm or less.

5. The negative electrode for a lithium ion secondary battery according to any one of claims 1 to 4, wherein x satisfies 0<x≤0.1.

6. A method for producing the negative electrode for a lithium ion secondary battery according to any one of claims 1 to 5, wherein the active material is produced with a method comprising the steps of:
uniformly mixing together a lithium source selected from LiOH, LiOH hydrates and Li₂CO₃, a titanium oxide having an anatase crystalline structure, one or more Fe source selected from Fe₂O₃ and FeOOH, and one or more additive material selected from B₂O₃, H₃BO₃ and V₂O₅; and
baking the mixture at a temperature of 700°C or more and 1000°C or less.

## Patentansprüche

1. Negative Elektrode für eine Lithium-Ionen-Sekundärbatterie, die ein Aktivmaterial umfasst, das ein Lithium-Titan-Komplexoxid enthält,
**dadurch gekennzeichnet, dass**
das Lithium-Titan-Komplexoxid eine Zusammensetzung hat, die als Li₄Ti_{5-x-y}FeₓV_{y}O₁₂ ausgedrückt wird, wobei 0<x≤0,3, 0<y≤0,05 gilt.

2. Negative Elektrode für eine Lithium-Ionen-Sekundärbatterie, die ein Aktivmaterial umfasst, das ein Lithium-Titan-Komplexoxid enthält,
**dadurch gekennzeichnet, dass**
das Lithium-Titan-Komplexoxid eine Zusammensetzung hat, die als Li₄Ti_{5-x-z}FeₓB₂O₁₂ ausgedrückt wird, wobei 0<x≤0,3, 0<z≤0,3 gilt.

3. Negative Elektrode für eine Lithium-Ionen-Sekundärbatterie nach Anspruch 1, wobei eine mittlere Partikelgröße von Primärpartikeln des Lithium-Titan-Komplexoxids 1 µm oder mehr und 5 µm oder weniger beträgt.

4. Negative Elektrode für eine Lithium-Ionen-Sekundärbatterie nach Anspruch 2, wobei eine mittlere Partikelgröße von Primärpartikeln des Lithium-Titan-Komplexoxids 1 µm oder mehr und 11 µm oder weniger beträgt.

5. Negative Elektrode für eine Lithium-Ionen-Sekundärbatterie nach einem der Ansprüche 1 bis 4, wobei x 0<x≤0,1 erfüllt.

6. Verfahren zur Herstellung der negativen Elektrode für eine Lithium-Ionen-Sekundärbatterie gemäß einem der Ansprüche 1 bis 5, wobei das Aktivmaterial mit einem Verfahren hergestellt wird, das die folgenden Schritte umfasst:
gleichmäßiges Zusammenmischen einer Lithiumquelle, die aus LiOH, LiOH-Hydraten und Li₂CO₃ gewählt ist, eines Titanoxids, das eine Anatas-Kristallstruktur hat, einer oder mehrer Fe-Quellen, die aus Fe₂O₃ und FeOOH gewählt sind, und einer oder mehrer Zusatzmaterialien, die aus B₂O₃, H₃BO₃ und V₂O₅ gewählt sind; und
Backen des Gemisches bei einer Temperatur von 700°C oder mehr und 1000°C oder weniger.

## Revendications

1. Électrode négative pour une batterie secondaire au lithium-ion comprenant un matériau actif contenant un oxyde complexe de titane-lithium,
**caractérisée en ce que**
l'oxyde complexe de titane-lithium a une composition exprimée comme suit Li₄Ti_{5-x-y}FeₓV_{y}O₁₂ où 0 < x ≤ 0,3, 0 < y ≤ 0, 05.

2. Électrode négative pour une batterie secondaire au lithium-ion, comprenant un matériau actif contenant un oxyde complexe de titane-lithium,
**caractérisée en ce que**
l'oxyde complexe de titane-lithium a une composition exprimée comme suit Li₄Ti_{5-x-y}FeₓB_{z}O₁₂ où 0 < x ≤ 0,3, 0 < z ≤ 0,3.

3. Électrode négative pour une batterie secondaire au lithium-ion selon la revendication 1, dans laquelle une taille moyenne de particules primaires de l'oxyde complexe de titane-lithium est supérieure ou égale à 1 µm et inférieure ou égale à 5 µm.

4. Électrode négative pour une batterie secondaire au lithium-ion selon la revendication 2, dans laquelle une taille moyenne de particules primaires de l'oxyde complexe de titane-lithium est supérieure ou égale à 1 µm et inférieure ou égale à 11 µm.

5. Électrode négative pour une batterie secondaire au lithium-ion selon l'une quelconque des revendications 1 à 4, dans laquelle x satisfait à l'équation 0 < x ≤ 0,1.

6. Procédé de production de l'électrode négative pour une batterie secondaire au lithium-ion selon l'une quelconque des revendications 1 à 5, dans lequel le matériau actif est produit par un procédé comprenant les étapes consistant :
à mélanger ensemble de manière uniforme une source de lithium choisie parmi LiOH, des hydrates de LiOH et Li₂CO₃, un oxyde de titane ayant une structure cristalline d'anatase, une ou plusieurs source(s) de Fe choisie(s) parmi Fe₂O₃ et FeOOH, et un ou plusieurs matériau(x) servant d'additif choisi (s) parmi B₂O₃, H₃BO₃ et V₂O₅ ; et
à cuire le mélange à une température supérieure ou égale à 700°C et inférieure ou égale à 1000°C.
